# EUROPEAN PATENT APPLICATION

(11) **EP 2 988 262 A1**
(43) Date of publication of application: **24.02.2016**
(21) Application number: 14812976.0
(22) Date of filing: 17.06.2014
(51) Int. Cl.: G06Q 30/02

(54) **APPLICATION PURCHASE METHOD AND TERMINAL**

(30) Priority: 20.06.2013 CN 201310248032
(71) Applicant: Huawei Device Co., Ltd., Shenzhen, Guangdong 518129 (CN)
(72) Inventor: HUANG, Jiejing, Shenzhen Guangdong 518129 (CN); WU, Huangwei, Shenzhen Guangdong 518129 (CN); HUANG, Xi, Shenzhen Guangdong 518129 (CN)
(74) Representative: Maiwald Patentanwalts GmbH
(86) International application number: PCT/CN2014/080064
(87) International publication number: WO 2014/201991

(57) **Abstract**

Embodiments of the present invention disclose an application purchasing method and a terminal. The method includes: after an application is purchased on a first application platform by using a first terminal, receiving, by the first terminal, a proof of purchase returned by the first application platform; transmitting, to a developer of the application by using the first terminal, related information of a terminal that needs to be registered, so that the developer records the related information of the terminal that needs to be registered, where the terminal that needs to be registered includes at least one of the first terminal or a second terminal, and the related information includes at least a device unique identifier, an account identifier, and an operating system type; and applying, by using the first terminal and by using the proof of purchase, to the developer for a discount voucher corresponding to a registered terminal, so that one of the developer, the first application platform, or a second application platform saves the discount voucher or returns the discount voucher to the registered terminal corresponding to the discount voucher, where the registered terminal includes the first terminal or the second terminal. The present invention can implement providing a favorable discount for a same user who performs purchasing for multiple times.

## Description

### TECHNICAL FIELD

The present invention relates to the field of network service technologies, and in particular, to an application purchasing method, and a terminal.

### BACKGROUND

With the development of mobile communications technologies and the progress of intelligent mobile terminals, application of a mobile internet is increasingly wide. For example, Apple Inc. provides an iPhone application by using an application purchasing platform (for example: an application store App Store).

Demands of different users for different applications lead to ever-increasing applications developed by each application developer, and a life cycle of an application is relatively short.

At present, for a user who purchases an application, there may be the following scenarios:
(1) User A purchases application 1 of a developer by using an iPhone system. After a smartphone is used as a replacement, a mobile phone operating platform is changed into a Windows system, and user A expects to purchase application 1 again by using the smartphone system.
(2) A developer develops application 2, and user A first purchases application 2 by using a terminal system; then the developer further develops application 3; and after application 3 is published, user A expects to continue to purchase application 3 by using the terminal system.

In actual application, if an application developer can provide a preferential policy for a same user who performs purchasing for multiple times, more users may be more effectively attracted to purchase various applications.

### SUMMARY

Embodiments of the present invention provide an application purchasing method and a terminal, so as to implement providing a favorable discount for a same user who performs purchasing for multiple times.

To solve the foregoing technical problem, the embodiments of the present invention disclose the following technical solutions:
According to a first aspect, an application purchasing method is provided, including:
   after an application is purchased on a first application platform by using a first terminal, receiving, by the first terminal, a proof of purchase returned by the first application platform;
   transmitting, to a developer of the application by using the first terminal, related information of a terminal that needs to be registered, so that the developer records the related information of the terminal that needs to be registered, where the terminal that needs to be registered includes at least one of the first terminal or a second terminal, and the related information includes at least a device unique identifier, an account identifier, and an operating system type; and
   applying, by using the first terminal and by using the proof of purchase, to the developer for a discount voucher corresponding to a registered terminal, so that one of the developer, the first application platform, or a second application platform saves the discount voucher or returns the discount voucher to the registered terminal corresponding to the discount voucher, where the registered terminal includes the first terminal or the second terminal.

With reference to the foregoing first aspect, in a first possible implementation manner, further includes:
acquiring a corresponding favorable discount according to the discount voucher when an application provided by the developer is purchased on the first application platform or the second application platform by using the registered terminal corresponding to the discount voucher.

With reference to the foregoing first aspect or the first possible implementation manner, in a second possible implementation manner, the applying, by using the first terminal and by using the proof of purchase, to the developer for a discount voucher corresponding to a registered terminal, so that one of the developer, the first application platform, or a second application platform saves the discount voucher or returns the discount voucher to the registered terminal corresponding to the discount voucher includes:
when the registered terminal corresponding to the discount voucher is the first terminal, applying, by using the first terminal and by using the proof of purchase, to the developer for the discount voucher corresponding to the first terminal, so that the developer sends the discount voucher to the first terminal according to the proof of purchase; or
when the registered terminal corresponding to the discount voucher is the first terminal, applying, by using the first terminal and by using the proof of purchase, to the developer for the discount voucher corresponding to the first terminal, so that the developer sends the discount voucher to the first application platform according to the proof of purchase, and the first application platform saves the discount voucher, and sends the discount voucher to the first terminal when the first application platform is logged on by using the first terminal.

According to a second aspect, an application purchasing method is provided, including:
acquiring a digital certificate and a private key by using a second terminal, where the digital certificate and the private key are transmitted by a first terminal to a developer of a first application together with a first account identifier, a first device unique identifier, a proof of purchase, and an operating system type, so that the developer records related information of the first terminal, where the proof of purchase is returned by a first application platform, and is received by the first terminal after the first application is purchased on the first application platform by using the first terminal;
transmitting related information of the second terminal to the developer by using the second terminal, so that the developer records the related information of the second terminal, where the related information of the second terminal includes at least a second account identifier, a second device unique identifier, the digital certificate, the private key, and an operating system type; and
applying, by using the second terminal, to the developer for a discount voucher corresponding to the second terminal, so that the developer returns the discount voucher according to the proof of purchase.

With reference to the foregoing second aspect, in a first possible implementation manner, the method further includes:
acquiring a corresponding favorable discount according to the discount voucher when an application provided by the developer is purchased on a second application platform by using the second terminal.

According to a third aspect, a first terminal is provided, including:
a receiving module, configured to receive a proof of purchase returned by the first application platform after an application is purchased on a first application platform by using the first terminal;
a transmitting module, configured to transmit, to a developer of the application, related information of a terminal that needs to be registered, so that the developer records the related information of the terminal that needs to be registered, where the terminal that needs to be registered includes at least one of the first terminal or a second terminal, and the related information includes at least a device unique identifier, an account identifier, and an operating system type; and
an applying module, configured to apply, by using the proof of purchase, to the developer for a discount voucher corresponding to a registered terminal, so that one of the developer, the first application platform, or a second application platform saves the discount voucher or returns the discount voucher to the registered terminal corresponding to the discount voucher, where the registered terminal includes the first terminal or the second terminal.

With reference to the foregoing third aspect, in a first possible implementation manner, further includes:
a purchasing module, configured to acquire a corresponding favorable discount according to the discount voucher when an application provided by the developer is purchased on the first application platform or the second application platform by using the first terminal.

According to a fourth aspect, a second terminal is provided, including:
an acquiring module, configured to acquire a digital certificate and a private key, where the digital certificate and the private key are transmitted by a first terminal to a developer of a first application together with a first account identifier, a first device unique identifier, a proof of purchase, and an operating system type, so that the developer records related information of the first terminal, where the proof of purchase is returned by a first application platform, and is received by the first terminal after the first application is purchased on the first application platform by using the first terminal;
a transmitting module, configured to transmit related information of the second terminal to the developer, so that the developer records the related information of the second terminal, where the related information of the second terminal includes at least a second account identifier, a second device unique identifier, the digital certificate, the private key, and an operating system type; and
an applying module, configured to apply to the developer for a discount voucher corresponding to the second terminal, so that the developer returns the discount voucher according to the proof of purchase.

With reference to the foregoing fourth aspect, in a first possible implementation manner, further includes:
a purchasing module, configured to acquire a corresponding favorable discount according to the discount voucher when an application provided by the developer is purchased on a second application platform.

The method and the terminal that are provided in the embodiments of the present invention can implement providing a favorable discount for a same user who performs purchasing for multiple times.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, a person of ordinary skill in the art may still derive other drawings from these accompanying drawings without creative efforts.
FIG. 1 is a block diagram of an embodiment of an application purchasing method according to the present invention;
FIG. 2 is a block diagram of an embodiment of another application purchasing method according to the present invention;
FIG. 3 is a block diagram of an embodiment of still another application purchasing method according to the present invention;
FIG. 4 is a block diagram of an embodiment of yet another application purchasing method according to the present invention;
FIG. 5A and FIG. 5B are a block diagram of a process of acquiring a discount voucher in a specific application scenario of the method embodiment shown in FIG. 1;
FIG. 6 is a block diagram of a process of purchasing an application by using a discount voucher in an application scenario corresponding to FIG. 5;
FIG. 7 is a block diagram of a process of acquiring, by a user, a discount voucher in a specific application scenario of the method embodiment shown in FIG. 3;
FIG. 8 is an apparatus block diagram of a first terminal according to the present invention;
FIG. 9 is an apparatus block diagram of another first terminal according to the present invention;
FIG. 10 is an apparatus block diagram of a second terminal according to the present invention;
FIG. 11 is an apparatus block diagram of another second terminal according to the present invention; and
FIG. 12 is a structural block diagram of an embodiment of an application purchasing device based on a computer system according to the present invention.

### DESCRIPTION OF EMBODIMENTS

To make a person skilled in the art understand the technical solutions in the embodiments of the present invention better, and make the foregoing objectives, features, and advantages of the embodiments of the present invention clearer, the following further describes the technical solutions in the embodiments of the present invention in detail with reference to the accompanying drawings.

Firstly, some nouns that appear in the embodiments of the present invention are explained as follows:
A first terminal and a second terminal are two different terminal devices that are configured to implement application purchasing and may be specifically: a mobile phone, a PAD device, another handheld device, or the like, where a first device operating system and a second device operating system may be the same, or may be also different.

An application platform refers to an application store, for example, an AppStore of Apple Inc.

A proof of purchase refers to related information of purchase, for example, application platform information, a purchase time, and an application name; and the proof of purchase may be specifically a combination of a set of numbers, a combination of a number and a letter, or the like.

A discount voucher refers to related preferential information, for example, a discount or a specific price; and the discount voucher may be specifically a combination of a set of numbers, a combination of a number and a letter, or the like.

A favorable discount refers to a preferential margin, for example, 80% of an original price.

A device unique identifier is an identifier that is used to uniquely identify a device.

An account identifier is an identifier that is used to identify a user, and different users may be differentiated according to the account identifier.

An operating system type is an operating system type of a terminal that is configured to purchase an application, for example, IOS (an operating system developed by Apple Inc.).

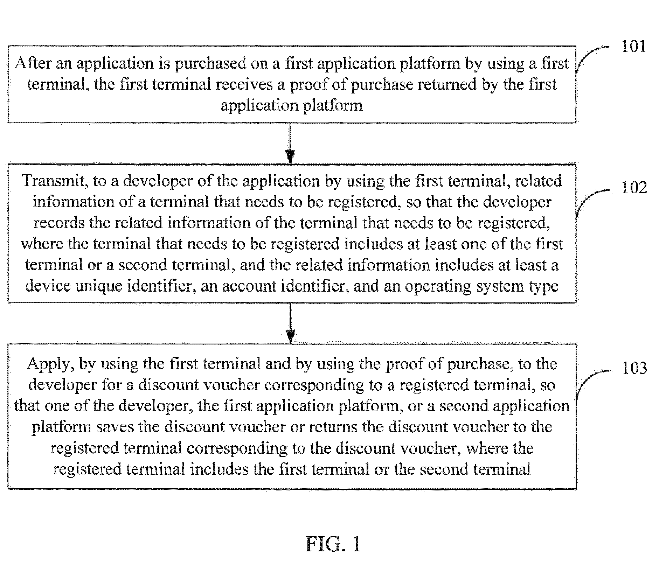

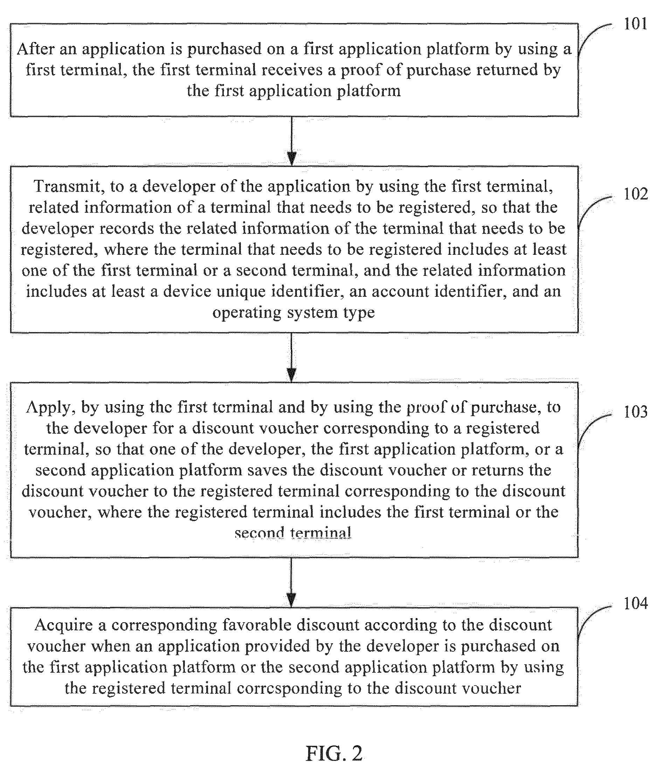

Referring to FIG. 1, FIG. 1 is a flowchart of an embodiment of an application purchasing method according to the present invention. A process of the method specifically includes the following steps:
Step 101: After an application is purchased on a first application platform by using a first terminal, the first terminal receives a proof of purchase returned by the first application platform.
   In step 101, when a user purchases, on the application platform by using the first terminal, an application provided by an application developer, the application platform provides a proof of purchase for the user.
   To enhance security, signature information of the application platform may be carried in the proof of purchase. For example, the user purchases, in an AppStore, an application by using the user's own iPhone mobile phone, and acquires a proof of purchase that carries a signature of Apple Inc.
Step 102: Transmit, to a developer of the application by using the first terminal, related information of a terminal that needs to be registered, so that the developer records the related information of the terminal that needs to be registered, where the terminal that needs to be registered includes at least one of the first terminal or a second terminal, and the related information includes at least a device unique identifier, an account identifier, and an operating system type.
   In step 102, by using the first terminal, the user who purchases the application applies to the developer of the application for registration, and provides the developer with the information about the terminal that needs to be registered, and the developer records the related information of the terminal that needs to be registered, where the terminal that needs to be registered includes the first terminal or the second terminal, or includes both the first terminal and the second terminal.
   Specifically, a registration request message may be used to carry the related information of the terminal that needs to be registered, where the related information includes at least the device unique identifier, the account identifier, and the operating system type. For example, for an iPhone user, registration information may include an iPhone DUID (Device Unique Identifier, device unique identifier), an Apple ID, and IOS (an operating system developed by Apple Inc.) information that are of the user, where the iPhone DUID may be used as an index of the registration information of the user.
Step 103: Apply, by using the first terminal and by using the proof of purchase, to the developer for a discount voucher corresponding to a registered terminal, so that one of the developer, the first application platform, or a second application platform saves the discount voucher or returns the discount voucher to the registered terminal corresponding to the discount voucher, where the registered terminal includes the first terminal or the second terminal.
   In step 103, the user who has completed the registration may apply to the developer of the application for the discount voucher by using the first terminal and by using the proof of purchase, where the discount voucher is used to provide a favorable discount for a user who performs application purchasing for multiple times, and the discount voucher is corresponding to a registered terminal, where the terminal may include the first terminal or the second terminal, or include both the first terminal and the second terminal. The user who applies for the discount voucher may provide the proof of purchase obtained by the user when the user previously purchases the application, so as to indicate that the user has previously purchased an application developed by the developer, and one of the developer, the first application platform, or the second application platform saves the discount voucher. Correspondingly, the developer, the first application platform, or the second application platform determines, by authenticating the proof of purchase that is provided by the user by using the first terminal, that the user has previously purchased an application, and therefore, the user meets an object of applying the discount voucher.
   In step 103, the developer provides the discount voucher for the terminal registered by the user, and the user receives the discount voucher by using the registered terminal, and saves the discount voucher at the registered terminal.
   In this embodiment of the present invention, when a user applies to a developer of an application for a discount voucher, and provides a previous proof of purchase, the developer may identify, according to the proof of purchase, that the current user has previously purchased an application developed by the developer and meets a condition of an object for which the discount voucher is to be provided. Therefore, the discount voucher may be provided for the user, which facilitates the user to acquire a corresponding favorable discount when an application is purchased again, thereby implementing providing a favorable discount for a same user who performs purchasing for multiple times.
   In the foregoing embodiment, a process is described in which a user who has previously purchased an application applies to an application developer for a discount voucher. After obtaining the discount voucher, the user may further use the discount voucher in a next application purchasing process, which is specifically shown in step 104 of an embodiment shown in FIG. 2.
Step 104: Acquire a corresponding favorable discount according to the discount voucher when an application provided by the developer is purchased on the first application platform or the second application platform by using the registered terminal corresponding to the discount voucher.
   In step 104, when purchasing again, by using the registered terminal, an application provided by the same developer, the user invokes the discount voucher stored at the registered terminal, and provides the discount voucher for a corresponding application platform, so that the developer provides the corresponding favorable discount for the user according to the discount voucher.

When the user purchases again, by using the registered terminal, an application provided by the same developer, the discount voucher is not limited to being acquired only in a case in which the user purchases an application the same as that is purchased previously, instead, the discount voucher can be obtained as long as the user purchases again any application provided by the same developer.

In a specific implementation process, the registered terminal corresponding to the discount voucher may be the first terminal or the second terminal.

When the user purchases again an application provided by the same developer, the first terminal that implements previous purchasing may still be used for implementation. In this case, the registered terminal corresponding to the discount voucher is the first terminal. In this way, the user may apply, by directly using the first terminal, to the developer for the discount voucher corresponding to the first terminal. Because the user has purchased an application by using the first terminal, and a proof of purchase provided by the developer is saved at the first terminal, the user may directly provide, when applying the discount voucher by using the first terminal, the proof of purchase saved at the first terminal.

Alternatively, the discount voucher corresponding to the first terminal is applied to the developer by using the first terminal and by using the proof of purchase, so that the developer sends the discount voucher to the first application platform according to the proof of purchase, and the first application platform saves the discount voucher, and sends the discount voucher to the first terminal when the user logs on the first application platform by using the first terminal.

With the constant upgrade of smartphones, a mobile phone of a user is increasingly frequently upgraded; one user even has multiple smartphones at a same time. These smartphones may have different operating platforms or different OSs (Operating System, operating system), for example, may have IOS, Android, or a Windows Phone OS. Therefore, the user may use a second terminal that is different from a first terminal when purchasing again an application provided by a same developer. In this scenario, the user may still apply, by using the first terminal, to the developer for a discount voucher corresponding to the second terminal, and provides a proof of purchase saved at the first terminal. In this case, a registration request message needs to carry related information of the second terminal. A specific implementation manner is:
applying, by using the first terminal and by using the proof of purchase, to the developer for the discount voucher corresponding to the second terminal, so that the developer sends the discount voucher to the second terminal according to the proof of purchase; or applying, by using the first terminal and by using the proof of purchase, to the developer for the discount voucher corresponding to the second terminal, so that the developer sends the discount voucher to the second application platform according to the proof of purchase, and the second application platform saves the discount voucher, and sends the discount voucher to the second terminal when the second application platform is logged on by using the second terminal.

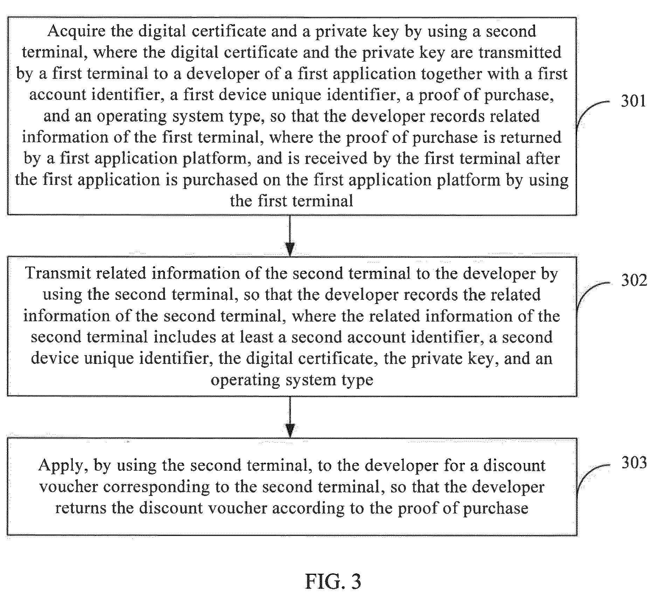

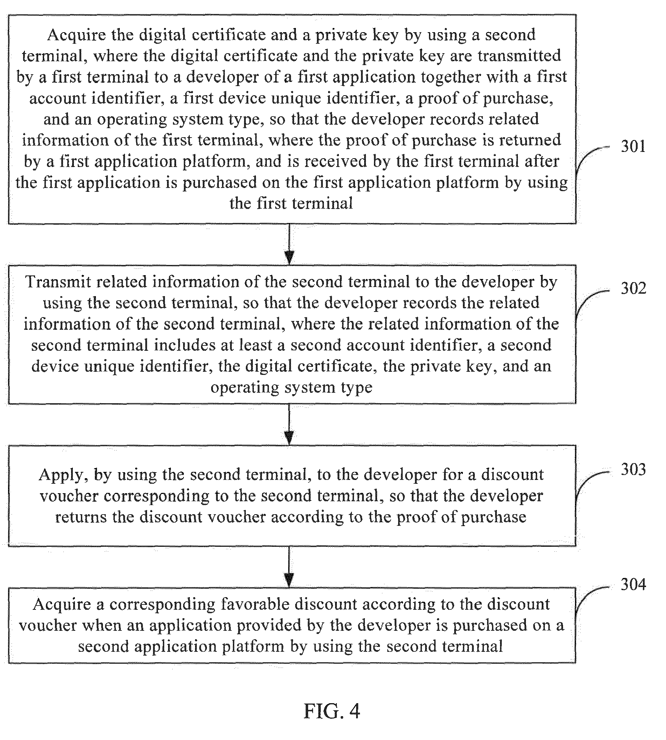

In the foregoing implementation manner, the proof of purchase is generally stored at the first terminal directly. When the first terminal is damaged or lost, the user loses the proof of purchase correspondingly. Because the proof of purchase is lost, and the user cannot prove to an application developer that the user has previously purchased an application provided by the developer, a corresponding discount voucher cannot be provided for the developer, which causes a loss to the user. To avoid this situation, the present invention provides another application purchasing method. As shown in FIG. 3, an embodiment of the application purchasing method includes the following steps:
Step 301: Acquire the digital certificate and a private key by using a second terminal, where the digital certificate and the private key are transmitted by a first terminal to a developer of a first application together with a first account identifier, a first device unique identifier, a proof of purchase, and an operating system type, so that the developer records related information of the first terminal, where the proof of purchase is returned by a first application platform, and is received by the first terminal after the first application is purchased on the first application platform by using the first terminal.
Step 302: Transmit related information of the second terminal to the developer by using the second terminal, so that the developer records the related information of the second terminal, where the related information of the second terminal includes at least a second account identifier, a second device unique identifier, the digital certificate, the private key, and an operating system type.
Step 303: Apply, by using the second terminal, to the developer for a discount voucher corresponding to the second terminal, so that the developer returns the discount voucher according to the proof of purchase.
   When a user applies for registration with the developer by using the first terminal, in addition to carrying the related information of the second terminal that needs to be registered, a registration request message further includes an identity of the user and the proof of purchase, so that the developer stores the identity of the user and the proof of purchase. In addition, the user may store the identity in another device other than the first terminal. In this way, the user may acquire the identity from the another device by using the second terminal, and apply, by using the second terminal, to the developer for the discount voucher corresponding to the second terminal, where the identity is carried in an applying request. In addition, the information related to the second terminal further needs to be carried, such as the second account identifier, the second device unique identifier, and the operating system type. Because the developer has learned, from the registration request message sent by the first terminal, the related information of the second terminal, the identity of the user and the proof of purchase, when receiving a discount voucher application sent by the second terminal, may determine, by authenticating the identity carried in application information, that the user is a user corresponding to the proof of purchase, and then may feed back the discount voucher corresponding to the second terminal to the user.
   It should be noted that in specific implementation, the identity of the user may be a digital certificate corresponding to the user, private key information of the user, or the like, which is not specifically limited herein. The another device configured to store the user identity may be a cloud device, a portable storage device (such as a USB flash drive), and the like.
   In addition, in information registered by the user for applying to the application developer, a quantity of to-be-registered terminals may be limited. For example, one user may register five terminals at most.
   After obtaining the discount voucher by using the second terminal, the user may further use the discount voucher in a next application purchasing process, which is specifically shown in step 304 of an embodiment shown in FIG. 4.
Step 304: Acquire a corresponding favorable discount according to the discount voucher when an application provided by the developer is purchased on a second application platform by using the second terminal.
   Specific implementation manners in which the developer feeds back the discount voucher to the terminal may include:
   (1) The developer directly pushes the discount voucher to the registered terminal.
   (2) The developer sends the discount voucher to a corresponding application platform, and the corresponding application platform pushes the discount voucher to the registered terminal.

For ease of understanding the technical solutions of the present invention, the following describes in detail by using a specific embodiment.

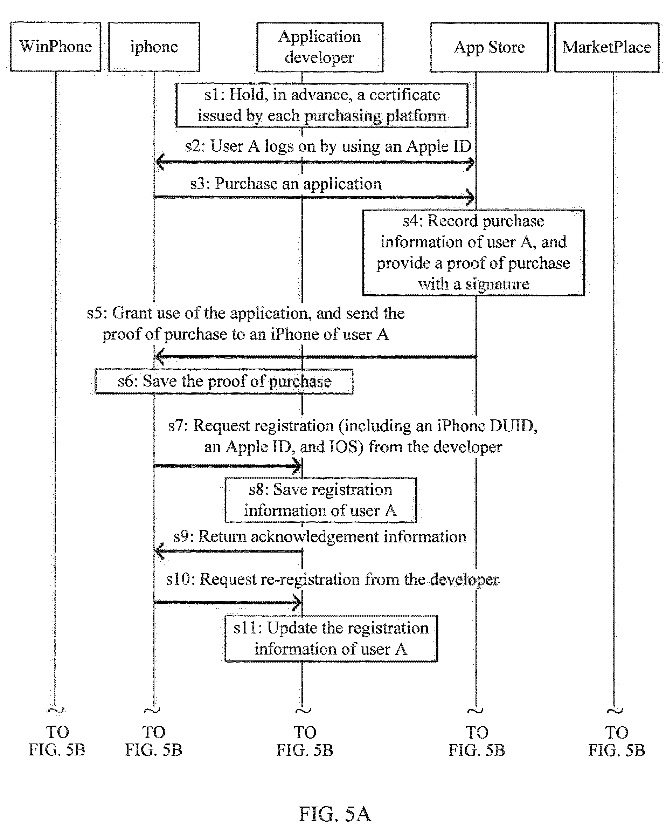

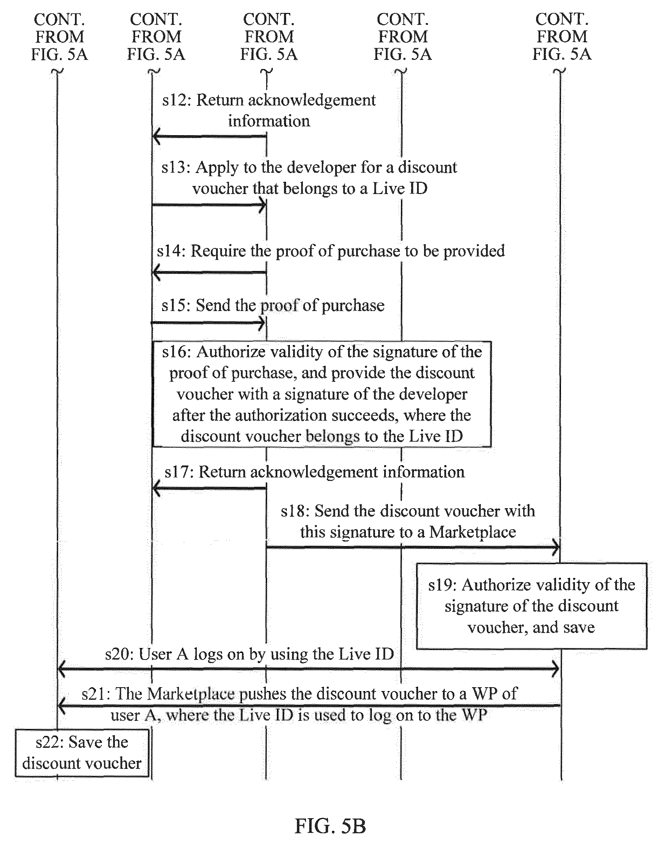

FIG. 5 shows a process of acquiring a discount voucher in a specific application scenario of the method embodiment shown in FIG. 1. specifically includes:
s1. An application developer holds a digital certificate of each application platform in advance, and the application developer is allowed to send, to a user, a discount voucher in which the digital certificate is used as a signature.
s2. User A logs on by using an Apple ID on an iPhone.
s3. The user purchases an application in an AppStore by using the iPhone.
s4: The App Store records that user A uses the Apple ID to perform purchasing, and provides a proof of purchase with an App Store signature for the iPhone of user A.
s5: The App Store grants user A permission to use the application by using the Apple ID, and sends the proof of purchase to the iPhone.
s6: User A saves the proof of purchase by using the iPhone.
s7: User A requests a developer of the application to register registration information related to user A, where the registration information includes an iPhone DUID, the Apple ID, and IOS information that are of user A, and the iPhone DUID may be used as an index of the registration information of user A.
s8: The application developer saves the registration information of user A.
s9: After completing registration of user A, the application developer returns a piece of acknowledgement information to the iPhone of user A.
s10: (User A adds a new mobile phone Windows Phone that is corresponding to a Live ID) User A requests, on the iPhone, the application developer to re-register information about the new mobile phone, where the registration information includes a Live ID, WP operating system information, and a Windows Phone DUID that are of user A.
s11. The application developer updates the registration information of user A, and adds the related registration information of the new mobile phone of user A.
s12: After completing updating of the registration information of user A, the application developer returns a piece of acknowledgement information to the iPhone of user A.
s13: User A applies to the application developer for a discount voucher that belongs to the Live ID.
s14: The application developer requires user A to present the proof of purchase.
s15: User A provides the application developer with the proof of purchase saved in the iPhone.
s16: The application developer authorizes validity of the signature of the proof of purchase presented by user A, and provides, after the authorization succeeds, the discount voucher that belongs to the Live ID, where the discount voucher also carries signature information of the application developer.
s17: The application developer returns a piece of acknowledge information to the iPhone of user A to indicate that the discount voucher that belongs to Live ID has been provided.
s18: The application developer sends the discount voucher that belongs to the Live ID to an application purchasing platform Marketplace of a WP system.
s19: The Marketplace authorizes validity of the signature of the discount voucher, and saves the discount voucher after the authorization succeeds.
s20: User A logs on by using the Live ID on the Windows Phone.
s21: After discovering that the Live ID is used to log on to the Windows Phone of user A, the Marketplace pushes the saved discount voucher that belongs to the Live ID to the Windows Phone of user A.
s22: The Windows Phone of user A receives and saves the discount voucher.
   It can be seen that the foregoing steps s1 to s22 implement a process in which user A purchases an application for the first time and obtains a discount voucher by applying.

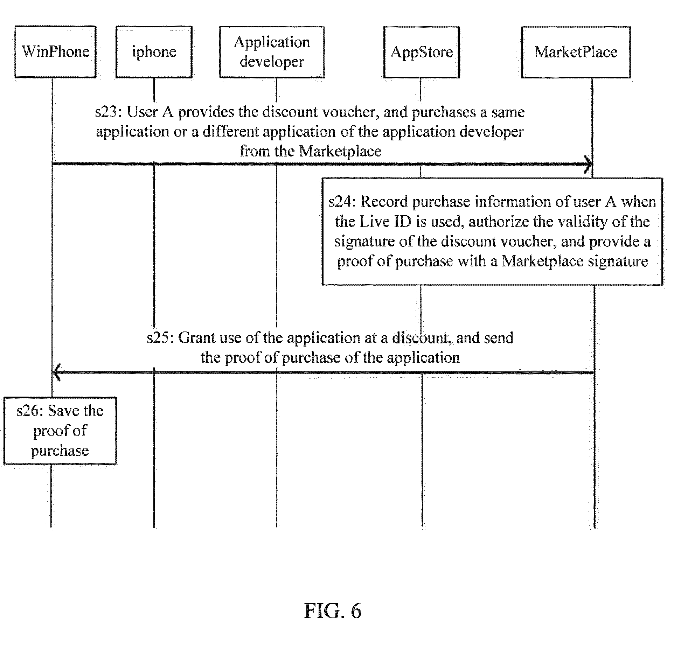

   FIG. 6 shows a process of purchasing, by user A in the foregoing application scenario, an application by using a Windows Phone and by using a discount voucher.
s23: User A provides the discount voucher and purchases, from the Marketplace, a same application or a different application of the application developer.
s24: The Marketplace records a purchase record of user A when the Live ID is used, authorizes the validity of the signature of the discount voucher, and provides a proof of purchase with a Marketplace signature after the authorization succeeds.
s25: The Marketplace grants use of the application at a preferential price, and sends the proof of purchase to the Windows Phone of user A.
s26: The Windows Phone of user A saves the proof of purchase.

In the foregoing process, a complete process is implemented in which user A applies, by using an iPhone, for a discount voucher corresponding to a Windows Phone, and purchases an application by using the Windows Phone and by using the discount voucher.

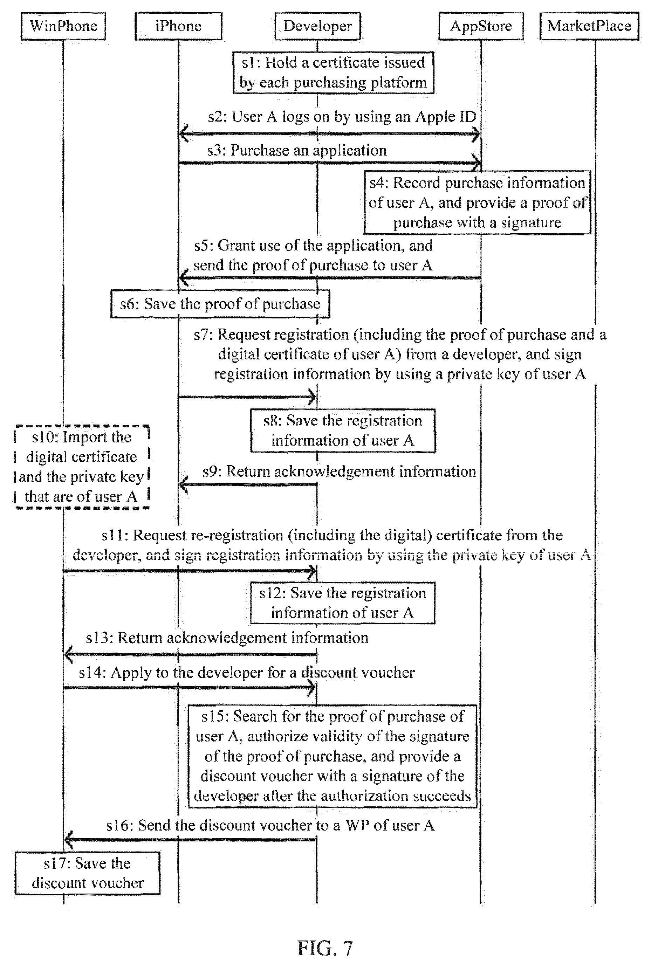

FIG. 7 shows a process of acquiring, by a user, a discount voucher in a specific application scenario of the method embodiment shown in FIG. 3. The process specifically includes:
s1. An application developer holds, in advance, a digital certificate issued by each application purchasing platform, and the application developer is allowed to send, to a user, a discount voucher in which a corresponding digital certificate is used as a signature.
s2. User A logs on by using an Apple ID on an iPhone.
s3: Purchase an application in an App Store by using the iPhone.
s4: The App Store records that user A uses the Apple ID to perform purchasing, and provides a proof of purchase with an App Store signature for the iPhone of user A.
s5: The App Store grants user A permission to use the application by using the Apple ID, and sends the proof of purchase to the iPhone.
s6: User A saves the proof of purchase by using the iPhone.
s7: User A requests the developer to record registration information related to user A, where the registration information includes the Apple ID, IOS information, the proof of purchase, and a digital certificate that arc of user A, and a hash value of the digital certificate may be used as an index of the registration information of user A, a private key of user A is used to sign the foregoing registration information, and the digital certificate and the private key that are of user A may be stored in an external device.
s8: The application developer saves the registration information of user A.
s9: After completing registration of user A, the application developer returns a piece of acknowledgement information to the iPhone of user A.
s10: (User A adds a new mobile phone Windows Phone that is corresponding to a Live ID) User A imports, by using the Windows Phone, the digital certificate and the private key that are of user A from a cloud or another external device.
s11: User A requests, on the Windows Phone, the application developer to re-record new registration information of user A, where the registration information includes the Live ID, WP operating system information, and the digital certificate that are of user A, and the private key of user A is used as a signature of the foregoing registration information.
s12. The application developer updates the registration information of user A, and adds the related registration information of the new mobile phone of user A.
s13: After completing updating of the registration information of user A, the application developer returns a piece of acknowledgement information to the Windows Phone of user A.
s14: User A applies to the application developer for a discount voucher by using the Windows Phone.
s15: The application developer searches for the proof of purchase of user A and authorizes validity of the signature of the proof of purchase, and provides a discount voucher after the authorization succeeds, where the discount voucher carries signature information of the application developer.
s16: The application developer directly pushes the discount voucher to the Windows Phone of user A.
s17: The Windows Phone of user A receives and saves the discount voucher.

The foregoing steps s1 to s17 complete a process in which user A purchases an application for the first time and obtains a discount voucher by applying.

The process in which user A purchases an application by using a Windows Phone and by using a discount voucher is the same as that in the first application scenario, and therefore, details are not described herein again.

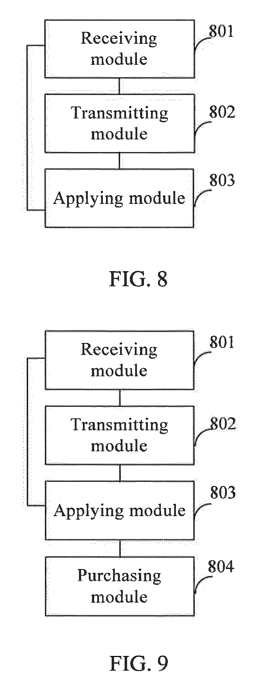

Corresponding to the foregoing embodiment of an application purchasing method, the present invention further provides a first terminal. As shown in FIG. 8, the first terminal may specifically include:
a receiving module 801, configured to receive a proof of purchase returned by the first application platform after an application is purchased on a first application platform by using the first terminal;
a transmitting module 802, configured to transmit, to a developer of the application, related information of a terminal that needs to be registered, so that the developer records the related information of the terminal that needs to be registered, where the terminal that needs to be registered includes at least one of the first terminal or a second terminal, and the related information includes at least a device unique identifier, an account account identifier, and an operating system type; and
an applying module 803, configured to apply, by using the proof of purchase, to the developer for a discount voucher corresponding to a registered terminal, so that one of the developer, the first application platform, or a second application platform saves the discount voucher or returns the discount voucher to the registered terminal corresponding to the discount voucher, where the registered terminal includes the first terminal or the second terminal.

In this apparatus embodiment, when a user applies to a developer for a discount voucher, and provides a previous proof of purchase, the developer may identify, according to the proof of purchase, the current user that has previously purchased an application developed by the developer and meets an object for which a discount is to be provided. Therefore, the discount voucher may be provided for the user, which facilitates the user to acquire a corresponding favorable discount when an application is purchased again, thereby implementing providing a favorable discount for a same user who performs purchasing for multiple times.

Optionally, a first terminal shown in FIG. 9 may further include:
a purchasing module 804, configured to acquire a corresponding favorable discount according to the discount voucher when an application provided by the developer is purchased on the first application platform or the second application platform by using the first terminal.

By using the first terminal, when purchasing again, by using the first terminal, a same application or a different application provided by a same application developer, a user may acquire a corresponding favorable discount by using a received discount voucher.

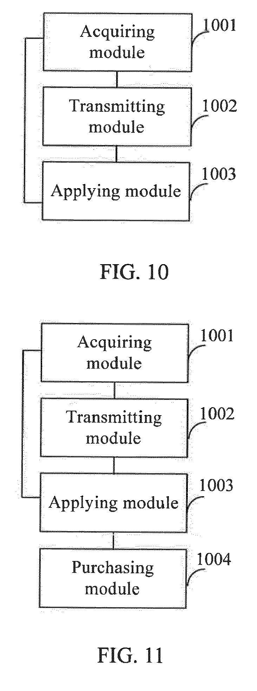

Correspondingly, the present invention further provides an embodiment of a second terminal. As shown in FIG. 10, the second terminal specifically includes:
an acquiring module 1001, configured to acquire a digital certificate and a private key, where the digital certificate and the private key are transmitted by a first terminal to a developer of a first application together with a first account identifier, a first device unique identifier, a proof of purchase, and an operating system type, so that the developer records related information of the first terminal, where the proof of purchase is returned by a first application platform, and is received by the first terminal after the first application is purchased on the first application platform by using the first terminal;
a transmitting module 1002, configured to transmit related information of the second terminal to the developer, so that the developer records the related information of the second terminal, where the related information of the second terminal includes at least a second account account identifier, a second device unique identifier, the digital certificate, the private key, and an operating system type; and
an applying module 1003, configured to apply to the developer for a discount voucher corresponding to the second terminal, so that the developer returns the discount voucher according to the proof of purchase.

In most cases, the proof of purchase is generally directly stored at a terminal, is used when the user purchases an application. However, when the terminal is damaged or lost, the user loses the proof of purchase correspondingly. Because the proof of purchase is lost, and the user cannot prove to an application developer that the user has previously purchased an application provided by the developer, a corresponding discount voucher cannot be provided for the developer, which causes a loss to the user.

To avoid this situation, in the foregoing embodiment of the second terminal, the registration request message further includes an identity of the user and the proof of purchase, and the identity is stored in another device. When the user applies for registration with the developer, in addition to carrying the related information of the second terminal that needs to be registered, the registration request message further includes the identity of the user and the proof of purchase, so that the developer stores the identity of the user and the proof of purchase. In addition, the user may store the identity in another external device. In this way, the user may acquire the identity from the device by using the identity, and apply to the developer for a discount voucher corresponding to the current terminal, where the identity is carried in an applying request. Because the developer has learned, from the previous registration request message, the related information of the terminal, the identity of the user and the proof of purchase, when receiving the discount voucher application, the developer may determine, by authenticating the identity carried in application information, that the user is a user corresponding to the proof of purchase, and then may feed back the discount voucher corresponding to the current terminal to the user.

Optionally, in an embodiment of a second terminal shown in FIG. 11, the second terminal may further include:
a purchasing module 1004, configured to acquire a corresponding favorable discount according to the discount voucher when an application provided by the developer is purchased on a second application platform.

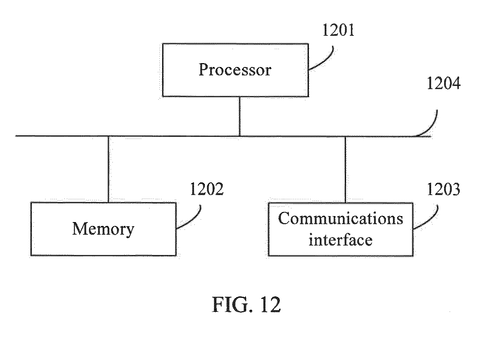

FIG. 12 shows an embodiment of an application purchasing device based on a computer system. In this embodiment, the application purchasing device may include a processor 1201, a memory 1202, and a communications interface 1203.

The memory 1202 is configured to store the proof of purchase and a discount voucher; the processor 1201 is configured to execute the following operations: after an application is purchased on a first application platform by using a first terminal, receiving, by using the communications interface 1203, the proof of purchase returned by the first application platform; transmitting, to a developer of the application by using the communications interface 1203, related information of a terminal that needs to be registered, so that the developer records the related information of the terminal that needs to be registered, where the terminal that needs to be registered includes at least one of the first terminal or a second terminal, and the related information includes at least a device unique identifier, an account identifier, and an operating system type; and applying, by using the communications interface 1203 and by using the proof of purchase, to the developer for a discount voucher corresponding to a registered terminal, so that one of the developer, the first application platform, or a second application platform saves the discount voucher or returns the discount voucher to the registered terminal corresponding to the discount voucher, where the registered terminal includes the first terminal or the second terminal.

Alternatively, the processor 1201 is configured to execute the following operations: acquiring a digital certificate and a private key by using the communications interface 1203, where the digital certificate and the private key are transmitted by a first terminal to a developer of a first application together with a first account identifier, a first device unique identifier, a proof of purchase, and an operating system type, so that the developer records related information of the first terminal, where the proof of purchase is returned by a first application platform, and is received by the first terminal after the first application is purchased on the first application platform by using the first terminal; transmitting related information of the second terminal to the developer by using the communications interface 1203, so that the developer records the related information of the second terminal, where the related information of the second terminal includes at least a second account identifier, a second device unique identifier, the digital certificate, the private key, and an operating system type; and applying, by using the communications interface 1203, to the developer for a discount voucher corresponding to the second terminal, so that the developer returns the discount voucher according to the proof of purchase.

The processor 1201 may be a central processing unit (central processing unit, CPU), an application-specific integrated circuit (application-specific integrated circuit, ASIC), and the like. The application purchasing device in this embodiment may include a bus 1204. The processor 1201, the memory 1202, and the communications interface 1203 may be connected and communicate with each other by using the bus 1204. The memory 1202 may include an entity having a storage function, such as a random access memory (random access memory, RAM), a read-only memory (read-only memory, ROM), and a magnetic disk.

The processor 1201 may be further configured to execute Push bandwidth service equipment steps described in method embodiments in FIG. 1 to FIG. 7, and details are not described herein again in this embodiment of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An application purchasing method, comprising:
after an application is purchased on a first application platform by using a first terminal, receiving, by the first terminal, a proof of purchase returned by the first application platform;
transmitting, to a developer of the application by using the first terminal, related information of a terminal that needs to be registered, so that the developer records the related information of the terminal that needs to be registered, wherein the terminal that needs to be registered comprises at least one of the first terminal or a second terminal, and the related information comprises at least a device unique identifier, an account identifier, and an operating system type; and
applying, by using the first terminal and by using the proof of purchase, to the developer for a discount voucher corresponding to a registered terminal, so that one of the developer, the first application platform, or a second application platform saves the discount voucher or returns the discount voucher to the registered terminal corresponding to the discount voucher, wherein the registered terminal comprises the first terminal or the second terminal.

2. The method according to claim 1, further comprising:
acquiring a corresponding favorable discount according to the discount voucher when an application provided by the developer is purchased on the first application platform or the second application platform by using the registered terminal corresponding to the discount voucher.

3. The method according to claim 1 or 2, wherein the applying, by using the first terminal and by using the proof of purchase, to the developer for a discount voucher corresponding to a registered terminal, so that one of the developer, the first application platform, or a second application platform saves the discount voucher or returns the discount voucher to the registered terminal corresponding to the discount voucher comprises:
when the registered terminal corresponding to the discount voucher is the first terminal, applying, by using the first terminal and by using the proof of purchase, to the developer for the discount voucher corresponding to the first terminal, so that the developer sends the discount voucher to the first terminal according to the proof of purchase; or
when the registered terminal corresponding to the discount voucher is the first terminal, applying, by using the first terminal and by using the proof of purchase, to the developer for the discount voucher corresponding to the first terminal, so that the developer sends the discount voucher to the first application platform according to the proof of purchase, and the first application platform saves the discount voucher, and sends the discount voucher to the first terminal when the first application platform is logged on by using the first terminal.

4. The method according to claim 1 or 2, wherein the applying, by using the first terminal and by using the proof of purchase, to the developer for a discount voucher corresponding to a registered terminal, so that one of the developer, the first application platform, or a second application platform saves the discount voucher or returns the discount voucher to the registered terminal corresponding to the discount voucher comprises:
when the registered terminal corresponding to the discount voucher is the second terminal, applying, by using the first terminal and by using the proof of purchase, to the developer for the discount voucher corresponding to the second terminal, so that the developer sends the discount voucher to the second terminal according to the proof of purchase; or
when the registered terminal corresponding to the discount voucher is the second terminal, applying, by using the first terminal and by using the proof of purchase, to the developer for the discount voucher corresponding to the second terminal, so that the developer sends the discount voucher to the second application platform according to the proof of purchase, and the second application platform saves the discount voucher, and sends the discount voucher to the second terminal when the second application platform is logged on by using the second terminal.

5. An application purchasing method, comprising:
acquiring a digital certificate and a private key by using a second terminal, wherein the digital certificate and the private key are transmitted by a first terminal to a developer of a first application together with a first account identifier, a first device unique identifier, a proof of purchase, and an operating system type, so that the developer records related information of the first terminal, wherein the proof of purchase is returned by a first application platform, and is received by the first terminal after the first application is purchased on the first application platform by using the first terminal;
transmitting related information of the second terminal to the developer by using the second terminal, so that the developer records the related information of the second terminal, wherein the related information of the second terminal comprises at least a second account identifier, a second device unique identifier, the digital certificate, the private key, and an operating system type; and
applying, by using the second terminal, to the developer for a discount voucher corresponding to the second terminal, so that the developer returns the discount voucher according to the proof of purchase.

6. The method according to claim 5, further comprising:
acquiring a corresponding favorable discount according to the discount voucher when an application provided by the developer is purchased on a second application platform by using the second terminal.

7. A first terminal, comprising:
a receiving module, configured to receive a proof of purchase returned by the first application platform after an application is purchased on a first application platform by using the first terminal;
a transmitting module, configured to transmit, to a developer of the application, related information of a terminal that needs to be registered, so that the developer records the related information of the terminal that needs to be registered, wherein the terminal that needs to be registered comprises at least one of the first terminal or a second terminal, and the related information comprises at least a device unique identifier, an account identifier, and an operating system type; and
an applying module, configured to apply, by using the proof of purchase, to the developer for a discount voucher corresponding to a registered terminal, so that one of the developer, the first application platform, or a second application platform saves the discount voucher or returns the discount voucher to the registered terminal corresponding to the discount voucher, wherein the registered terminal comprises the first terminal or the second terminal.

8. The first terminal according to claim 7, further comprising:
a purchasing module, configured to acquire a corresponding favorable discount according to the discount voucher when an application provided by the developer is purchased on the first application platform or the second application platform by using the first terminal.

9. A second terminal, comprising:
an acquiring module, configured to acquire a digital certificate and a private key, wherein the digital certificate and the private key are transmitted by a first terminal to a developer of a first application together with a first account identifier, a first device unique identifier, a proof of purchase, and an operating system type, so that the developer records related information of the first terminal, wherein the proof of purchase is returned by a first application platform, and is received by the first terminal after the first application is purchased on the first application platform by using the first terminal;
a transmitting module, configured to transmit related information of the second terminal to the developer, so that the developer records the related information of the second terminal, wherein the related information of the second terminal comprises at least a second account identifier, a second device unique identifier, the digital certificate, the private key, and an operating system type; and
an applying module, configured to apply to the developer for a discount voucher corresponding to the second terminal, so that the developer returns the discount voucher according to the proof of purchase.

10. The second terminal according to claim 8, further comprising:
a purchasing module, configured to acquire a corresponding favorable discount according to the discount voucher when an application provided by the developer is purchased on a second application platform.
